(19) Europäisches Patentamt
European Patent Office
Office européen des brevets

(11) Veröffentlichungsnummer: **0 130 521**
**A1**

(12) # EUROPÄISCHE PATENTANMELDUNG

(21) Anmeldenummer: **84107257.2**

(22) Anmeldetag: **25.06.84**

(51) Int. Cl.[4]: **C 08 J 3/02**, C 08 L 83/04, C 04 B 41/49

(30) Priorität: **02.07.83 DE 3323908**

(43) Veröffentlichungstag der Anmeldung: **09.01.85**
**Patentblatt 85/2**

(84) Benannte Vertragsstaaten: **AT BE DE FR GB IT NL SE**

(71) Anmelder: **BAYER AG, Konzernverwaltung RP Patentabteilung, D-5090 Leverkusen 1 Bayerwerk (DE)**

(72) Erfinder: **Grape, Wolfgang, Dr., Roggendorfstrasse 61, D-5000 Koeln 80 (DE)**
Erfinder: **Schlak, Ottfried, Dr., Carl-Duisberg-Strasse 331, D-5090 Leverkusen 1 (DE)**
Erfinder: **Steinberger, Helmut, Dr., Wienand-Rossi-Strasse 36, D-5090 Leverkusen 1 (DE)**
Erfinder: **Kober, Hermann, Unterscheider Weg 34, D-5060 Bergisch-Gladbach 2 (DE)**

(54) **Siliconharz-Emulsion.**

(57) Die vorliegende Erfindung betrifft lagerstabile wäßrige Emulsionen, die aus niedermolekularen, alkoxyfunktionellen Silikonharzen, einem Emulgiermittel und Wasser bestehen. Die Emulsionen eignen sich insbesondere zur Hydrophobierung von mineralischen Stoffen.

EP 0 130 521 A1

BAYER AKTIENGESELLSCHAFT 5090 Leverkusen, Bayerwerk

Konzernverwaltung RP
Patentabteilung Br/bo/c

## Siliconharz-Emulsion

Die vorliegende Erfindung betrifft stabile wäßrige Emulsionen von niedermolekularen alkoxyfunktionellen Siliconharzen, die für Imprägnier- und Beschichtungsanwendungen einsetzbar sind, und die insbesondere bei solchen Anwendungen bevorzugt sind, wo organische Lösungsmittel aufgrund ihrer toxikologischen Eigenschaften und ihrer Brandgefahr unerwünscht sind. Die Erfindung betrifft ferner ein Verfahren zur Herstellung solcher Emulsionen.

Siliconharz-Emulsionen sind an sich bekannt (vgl. z.B. DE-OS 3 200 709). Sie können in vielfältiger Weise eingesetzt werden und haben sich bei zahlreichen Anwendungen - aufgrund ihrer hervorragenden Eigenschaften - sehr gut bewährt. Anwendungsgebiete sind beispielsweise Klebstoffe, Trennüberzüge, Lackzusätze und Färbeformulierungen.

Die bekannten Siliconharz-Emulsionen sind jedoch in mancher Hinsicht verbesserungsbedürftig. So läßt vielfach die Eindringtiefe bei Imprägnierungen (z.B. im Bausektor) zu wünschen übrig. Häufig ist auch die Aushärtung der Silikonharze und die Verknüpfung mit anderen Harzen nicht voll befriedigend. Es war daher Aufgabe der vorliegenden Erfindung, noch universeller einsetzbare Siliconharz-Emulsionen bereitzustellen.

Gegenstand der vorliegenden Erfindung sind somit lagerstabile, wäßrige Emulsionen niedermolekularer, alkoxyfunktioneller Siliconharze enthaltend

a) 1 - 60 Gew.-% Siliconharz der allgemeinen Formel

$$R^1_x Si(OR^2)_y (O)_{\frac{4-x-y}{2}}$$

wobei

$R^1$ für einen einwertigen Kohlenwasserstoffrest mit 1 - 14 C-Atomen,

$R^2$ für einen einwertigen Kohlenwasserstoffrest mit 1 - 18 C-Atomen steht,

x einen Wert von 0,75 bis 1,5 und

y einen Wert von 0,2 bis 2,0 besitzt, und

mit einer Viskosität von 2 bis 2000 mPa.s,

b) 0,5 - 10 Gew.-% eines Emulgiermittels und

c) Wasser.

Im Gegensatz zu früher beschriebenen Siliconharzemulsionen, wie sie auch zum Beispiel in der DE-OS 3 200 709 offenbart wurden, handelt es sich bei den erfindungsgemäßen Zubereitungen um Emulsionen von niedermolekularen, alkoxyfunktionellen Siliconharzen. Solche alkoxyfunktionellen Siliconharze sind im allgemeinen sehr hydrolyseempfindlich, und sie neigen dazu, in Gegenwart von Wasser zu vergelen.

Überraschenderweise wurde nun gefunden, daß trotz der hohen Anzahl reaktiver Gruppen in den niedermolekularen Siliconharzen stabile Emulsionen aus diesen alkoxyfunktionellen Harzen herstellbar sind. Es ist weiterhin überraschend, daß trotz der beim Emulgierprozeß vorhandenen großen Mengen Wasser keine größeren Mengen durch Hydrolyse entstandenen Alkohols nachgewiesen werden können. Kleinere Mengen auf diesem Wege entstandenen Alkohols machen sich in keiner Weise störend bemerkbar, im Gegenteil, sie können sogar zur Stabilitätserhöhung der erfindungsgemäßen Emulsionen beitragen.

Die erfindungsgemäßen Emulsionen von niedermolekularen alkoxyfunktionellen Siliconharzen enthalten, neben Wasser folgende Bestandteile:

1 - 60 Gew.-%, vorzugsweise 20 - 50 %, eines alkoxyfunktionellen niedermolekularen Siliconharzes, das eine Viskosität von 2 bis 2000 mPa.s, vorzugsweise 20 bis 200 mPa.s, besitzt und eine Zusammensetzung der allgemeinen Formel

$$R^1_x Si(OR^2)_y (O)_{\frac{4-x-y}{2}}$$

hat, wobei $R^1$ ein einwertiger Kohlenwasserstoffrest mit 1 bis 14 C-Atomen und vorzugsweise der Methylrest ist, und wobei $R^2$ ein einwertiger Kohlenwasserstoffrest mit 1 bis 18 C-Atomen und vorzugsweise der Methylrest ist, und wobei x einen Wert von 0,75 bis 1,5 besitzt und vorzugsweise x etwa 1 ist, und wobei y einen Wert von 0,2 bis 2, vorzugsweise 0,4 bis 1,2, besitzt.

Die Emulgatorkomponente besteht im allgemeinen aus 0,5 bis 10 % einer Kombination von Emulgiermitteln, wobei sowohl rein nichtionische Emulgiermittel zur Anwendung kommen können als auch eine Kombination eines nichtionischen Emulgiermittels mit entweder einem anionischen oder einem kationischen Emulgiermittel.

Ferner können 0 bis 3 % eines weiteren Emulgierhilfsmittels, insbesondere eines verdickend wirkenden Emulgierhilfsmittels, vorzugsweise auf Cellulosebasis eingesetzt werden.

Dabei soll die aus diesen Bestandteilen bestehende Emulsion lagerstabil sein. Der Ausdruck "lagerstabil" bedeutet dabei, daß die Emulsion mindestens drei Monate ohne Trennung oder Vergelung lagerfähig ist.

Es ist auf dem Siliconharzsektor üblich, daß derartige Harze in Lösungsmitteln hergestellt werden. Das

eingesetzte niedermolekulare alkoxyfunktionelle Harz kann somit - bedingt durch die Art seiner Herstellung - noch organische Lösungsmittel enthalten, wobei die Lösungsmittelmenge allerdings 20 %, bezogen auf die Menge des Siliconharzes, nicht überschreiten sollte. Mögliche Lösungsmittel für derartige Harze sind Toluol, Xylol oder Kohlenwasserstoffe, z.B. Benzinfraktionen. Diese organischen Lösungsmittel beeinträchtigen in keiner Weise die Eigenschaften (z.B. die Stabilität) der Emulsion; sie sind jedoch in vielen Fällen unerwünscht. Die bevorzugte Ausführungsform der erfindungsgemäßen Emulgierung ist die, bei der kein organisches LM in der Emulsion enthalten ist; d.h. das organische Lösungsmittel wird vorher entfernt.

Es ist weiterhin vorteilhaft, der erfindungsgemäßen Emulsion eines die spätere Haftung auf einem Substrat oder die spätere Aushärtung fördernden Mittels zuzusetzen, z.B. Alkylzinnsalze. Die erfindungsgemäße Emulsion kann so nach der bevorzugten Ausführungsform direkt nach der Herstellung mit einer Emulsion eines Alkylzinnsalzes abgemischt werden. Es ist allerdings auch möglich, eine Härteremulsion erst direkt vor der gewünschten Anwendung zuzugeben.

Als derartige Zusätze eignen sich z.B. die bekannten Alkylzinnsalze wie z.B. Dibutylzinndilaurat, Dialkylzinnstearat, Dialkylzinnoktoat u.a.

Die Herstellung der erfindungsgemäß eingesetzten alkoxyfunktionellen Siliconharze ist bekannt und erfolgt durch Reaktion von Alkyl- und/oder Arylchlorsilanen mit Alkohol und Wasser (vgl. z.B. GB-PS 685 173, DE-PS 958 702, FR-PS 1 475 709, US-PS 3 668 180, DE-AS 2 061 189, DE-OS 2 444 529, DE-AS 2 532 887, EPI-PC 3610, DE-OS 3 000 782).

Das erfindungsgemäß besonders bevorzugte Methyl-Methoxy-Siliconharz wird durch Reaktion von Methyltrichlorsilanen mit Methanol und Wasser hergestellt. Gegebenenfalls können auch Mischungen von Methyltrichlorsilan und anderen Alkyl- und/oder Arylchlorsilanen und/oder Tetrachlorsilan für die Herstellung der alkoxyfunktionellen Siliconharze verwendet werden, ohne daß die Stabilität der erfindungsgemäßen Emulsion darunter leidet. Ebenso können auch Mischungen verschiedener Alkohole für die Harzherstellung verwendet werden und/oder verschiedene alkoxyfunktionelle Siliconharze miteinander vermischt werden, ohne daß die Stabilität der erfindungsgemäßen Emulsion dadurch beeinträchtigt wird. Jedoch ist aufgrund des Eigenschaftsbildes und der Wirtschaftlichkeit die Verwendung von Methyltrichlorsilan und Methanol für die Herstellung des alkoxyfunktionellen Siliconharzes bevorzugt. Weiterhin können dem Siliconharz geringe Mengen von Mitteln zugesetzt werden, welche die spätere Haftung auf einem Substrat oder die spätere Aushärtung des Siliconharzes auf dem Substrat fördern. Jedoch werden solche Mittel vorzugsweise als getrennt hergestellte Emulsion oder Dispersion zugefügt oder im Wasser der erfindungsgemäßen Emulsion gelöst.

Die Emulsionen auf Wasserbasis der oben beschriebenen Siliconharze werden durch Anwendung einer Kombination von Emulgiermitteln hergestellt. Bevorzugt wird dabei eine Kombination zweier nichtionischer Emulgatoren eingesetzt. Derartige Emulgiermittel sind Polyoxyethylenderivate von Fettalkoholen, z.B. POE(4)-Laurylalkohol, POE(10)-cetylalkohol, POE(20)-Stearylalkohol, POE(2)-Oleylalkohol, POE(20)-Oleylalkohol u.a., Polyoxyethylenderivate von Fettsäuren z.B. POE-Laurat, POE-Stearat, POE-Oleat u.a., Polyoxyethylensorbitanfettsäureester, z.B. POE(20)-Sorbitanmonolaurat, POE(20)-Sorbitan-Monopalmitat, POE(4)-Sorbitan-Monostearat, POE(20)-Sorbitantristearat, POE(5)-Sorbitanmonooleat u.a., Polyoxyethylenderivate von mehrwertigen Alkoholen, z.B. POE-Triglycerid, Polyoxyethylenderivate des Nonylphenols, z.B. POE(10)-Nonylphenol, POE(20)-Nonylphenol u.a., Sorbitanfettsäureester, z.B. Sorbitanmonolaurat, Sorbitanmonostearat, Sorbitantristearat u.a., und dergleichen mehr.

Die Menge an Emulgiermitteln, die zur Emulgierung von jeweils 100 Gew.-Teilen Harzfeststoffen benötigt wird, wird in einem weiten Bereich in Abhängigkeit von den Verfahrensbedingungen und der Auswahl der restlichen Bestandteile der Emulsion variieren. Bei der erfindungsgemäßen Herstellung der Emulsionen von niedermolekularen alkoxyfunktionellen Siliconharzen ist die Menge an Emulgiermitteln, die benötigt wird, in erster Linie abhängig von dem Gehalt an Alkoxygruppen im alkoxyfunktionellen Siliconharz. Eine Emulgatormenge von 10 Gew.-Teilen bezogen auf 100 Gew.-Teile Siliconharz ist aber im allgemeinen ausreichend zur Herstellung einer lagerstabilen Emulsion eines niedermolekularen alkoxyfunktionellen Siliconharzes. Besonders bevorzugt ist der Einsatz einer Kombination von nichtionischen Emulgiermitteln; insbesondere werden mit einer Kombination der nichtionischen Emulgiermittel POE(40)-Triglycerid/POE(2)-Oleylalkohol oder einer Kombination der nichtionischen Emulgiermittel POE (40)-Triglycerid/POE(6)-Tridecylalkohol stabile Emulsionen aus niedermolekularen alkoxyfunktionellen Siliconharzen hergestellt. Es sind aber auch andere Kombinationen aus nichtionischen Emulgiermitteln einsetzbar. Diese nichtionischen Emulgiermittel sind dem Fachmann im Prinzip geläufig (vgl. z.B. Stache, Tensidtaschenbuch, Hanser Verlag; Mc Cutchen's Detergents & Emulsifiers, North American Edition, 1979).

Es ist weiterhin möglich, eines der beiden eingesetzten nichtionischen Emulgiermittel durch entweder ein kationisches oder ein anionisches Emulgiermittel zu ersetzen, und also eine Kombination eines nichtionischen Emulgiermittels mit einem kationischen oder einem anionischen Emulgiermittel zu verwenden.

Als Emulgierhilfsmittel können alle dem Fachmann geläufigen Emulgierhilfsmittel eingesetzt werden. Besonders bevorzugt sind verdickend wirkende Emulgierhilfsmittel und hier insbesondere das Natriumsalz der Carboxymethylcellulose. Es können aber auch andere Emulgierhilfsmittel wie zum Beispiel längerkettige Alkohole, Polyvinylalkohole, Harnstoff usw. verwendet werden. Der Zusatz eines Emulgierhilfsmittels in der beschriebenen Art ist insbesondere

bevorzugt bei der Emulgierung eines niedermolekularen alkoxyfunktionellen Siliconharzes mit hohem Alkoxygehalt und niedriger Viskosität.

Die Methoden (vgl. z.B. E. Manegold, Emulsionen; P. Becker, Emulsions, Theory & Practice, New York 1965, Chapter 7) zur Herstellung von Emulsionen sind dem Fachmann im Prinzip ebenfalls geläufig. Die Reihenfolge der Zugabe der Bestandteile ist im allgemeinen nicht entscheidend. Wegen der Hydrolyseempfindlichkeit der niedermolekularen alkoxyfunktionellen Siliconharze ist im Falle der Emulgierung derartiger Harze diejenige Methode bevorzugt, bei der eine die Emulgier- und Emulgierhilfsmittel enthaltende wäßrige Lösung vorgelegt wird und das alkoxyfunktionelle Harz in diese Lösung eingetragen wird. Das Einsetzen von mechanischen Emulgierhilfen kann ebenfalls erwünscht sein. Zu derartigen mechanischen Emulgierhilfen gehören zum Beispiel schnellaufende Rührer (Ultraturrax), aber auch Druckemulgiermaschinen und Kolloidmühlen.

Die erfindungsgemäßen Siliconharzemulsionen werden hauptsächlich zur Imprägnierung und Beschichtung von Cellulosematerial oder anorganisch-oxidischen Materialien (z.B. Mauerwerke) eingesetzt. Sie sind geeignet zur Hydrophobierung von mineralischen Dämm- und Isolierstoffen und finden Verwendung als wasserabweisende Bindemittel in Dispersionsfarbanstrichen.

Der Gegenstand der vorliegenden Erfindung soll nunmehr anhand von Beispielen noch näher erläutert werden (%-Angaben beziehen sich - soweit nichts anderes vermerkt ist - auf Gew.-%).

Beispiele

Beispiel 1: Herstellung eines Methylmethoxyharzes

10 Mol Methanol werden mit 5,5 Mol Wasser gemischt und mit einem Tropftrichter bei 30°C Anfangstemperatur langsam zu einem Gemisch aus 6 Mol Methyltrichlorsilan und 400 g Xylol, das in einem Dreihalskolben intensiv gerührt wird, zugetropft. Durch den Aufsatzkühler entweicht gasförmiges HCl. Das Reaktionsgemisch kühlt sich stark ab. Nach Zugabe der wäßrigen Methanollösung wird das Reaktionsgemisch auf 40°C erwärmt und ein Gemisch aus Methanol und HCl im Vakuum abdestilliert. Restliches HCl wird mit wasserfreier Soda neutralisiert und anschließend das Lösungsmittel bei 30 mbar bis 135°C Sumpftemperatur abdestilliert. Nach Abkühlung und Filtration erhält man eine klare farblose Flüssigkeit mit einer Viskosität von 50 mPa.s bei 23°C. Die Zusammensetzung des so hergestellten Methyl-Methoxy-Siliconharzes entspricht der Bruttoformel

$$CH_3Si(O)_{1,1}(OCH_3)_{0,8}.$$

Beispiel 2: Emulgierung des wie unter 1 hergestellten Methyl-Methoxy-Siliconharzes

Ansatz für 100 kg Emulsion:

40 kg Methylmethoxyharz

3,2 kg (Polyoxyethylentriglycerid)
0,8 kg (Oleylalkohol mit 2 Eox-Einheiten)
56 kg Wasser

Herstellen der Emulsion:

Wasser vorlegen und unter Rühren auf 60°C erwärmen. Polyoxyethylentriglycerid wird geschmolzen zugegeben. 15 Min. rühren. Abkühlen lassen auf 40°C, Oleylalkohol mit 2 Eox-Einheiten zugeben, 5 Min. nachrühren. Anschließend wird innerhalb 1/2 Std. das in Beispiel 1 hergestellte Harz zugegeben, 20 Min. nachgerührt mit einem Kotthoffrührer und 4 x durch Hochdruckhomogenisiermaschine gegeben.

Die so hergestellte Emulsion ist trotz des hohen Alkoxygehaltes des alkoxyfunktionellen niedermolekularen Siliconharzes länger als 6 Monate stabil.

Beispiel 3

Eine Silikonharzemulsion mit einem Silikongehalt von 40 % gemäß Beispiel 2 wurde mit Wasser im Verhältnis 1 : 10 verdünnt.

Es wurden damit trockene Baustoffprobekörper mit den Abmessungen 50 x 50 x 15 mm durch Eintauchen behandelt. Die Tauchzeit betrug 10 Sekunden. Die so präparierten Proben wurden 7 Tage bei Raumtemperatur und anschließend 3 Tage bei 50°C getrocknet.

Es wurde die kapillare Wasseraufnahme in Gew.-% durch Lagerung der Probekörper in kaltem Wasser bei einer Eintauchtiefe von ca. 3 mm bestimmt.

Es wurden folgende Ergebnisse erzielt:

| Baustoff | Wasseraufnahme Gew.-% 2 Std. | 6 Std. | 24 Std. |
|---|---|---|---|
| Zementmörtel Sand/Zement: 1:3 unbehandelt | 6,5 | 6,9 | 6,9 |
| Zementmörtel imprägniert | 1,1 | 1,3 | 2,2 |
| Kalksteinsand unbehandelt | 9,0 | 9,3 | 9,4 |
| Kalksteinsand imprägniert | 1,2 | 2,5 | 5,2 |
| Ziegel unbehandelt | 8,1 | 8,4 | 9,3 |
| Ziegel imprägniert | 0,9 | 1,0 | 1,4 |
| Kalkzementputz 8 Tle. Sand, 2 Tle. Kalk, 1 Teil Zement | 10,9 | 10,9 | 11,0 |
| KZP " imprägniert | 1,5 | 1,7 | 1,8 |

## Patentansprüche

1) Lagerstabile, wäßrige Emulsionen niedermolekularer, alkoxyfunktioneller Siliconharze enthaltend

a) 1 - 60 Gew.-% Siliconharz der allgemeinen Formel

$$R^1_xSi(OR^2)_y(O)_{\frac{4-x-y}{2}}$$

wobei

$R^1$ für einen einwertigen Kohlenwasserstoffrest mit 1 - 14 C-Atomen,

$R^2$ für einen einwertigen Kohlenwasserstoffrest mit 1 - 18 C-Atomen steht,

x einen Wert von 0,75 bis 1,5 und

y einen Wert von 0,2 bis 2,0 besitzt, und

mit einer Viskosität von 2 bis 2000 mPa.s,

b) 0,1 - 10 Gew.-% eines Emulgiermittels und

c) Wasser.

2) Emulsion gemäß Anspruch 1, dadurch gekennzeichnet, daß als Emulgiermittel eine Kombination von zwei nichtionischen Emulgatoren eingesetzt wird.

3) Verwendung von Emulsionen gemäß Anspruch 1 oder 2 zur Hydrophobierung von mineralischen Stoffen.

4) Verwendung von Emulsionen gemäß einem der Ansprüche 1 oder 2 als Imprägnier- und/oder Beschichtungsmittel.

Europäisches Patentamt

# EUROPÄISCHER RECHERCHENBERICHT

0130521
Nummer der Anmeldung

EP 84 10 7257

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | EP-A-0 049 365 (DYNAMIT NOBEL) * Ansprüche 1-8 * | 1-4 | C 08 J 3/02<br>C 08 L 83/04<br>C 04 B 41/49 |
| P,X | EP-A-0 089 784 (DOW CORNING) * Ansprüche 1,4,5; Seite 5, Zeilen 9-34; Seite 6, Zeilen 1-2,11-15; Seite 8, Zeilen 31-35; Seite 9, Zeilen 1-28 * | 1-4 | |
| X | DE-A-2 330 887 (GOLDSCHMIDT) * Patentanspruch; Seite 2, Spalte 2; Seite 4, Spalte 2; Seite 5, Spalte 2; Seite 7, Spalte 2 * | 1-4 | |
| A | DE-B-1 069 057 (UNION CARBIDE) * Ansprüche 1-4 * | 1 | |

RECHERCHIERTE SACHGEBIETE (Int. Cl. 3)

C 08 J 3
C 08 G
C 08 L
C 09 D
D 06 M
C 04 B

Der vorliegende Recherchenbericht wurde für alle Patentansprüche erstellt.

| Recherchenort | Abschlußdatum der Recherche | Prüfer |
|---|---|---|
| DEN HAAG | 10-10-1984 | DEPIJPER R.D.C. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82